# EUROPEAN PATENT APPLICATION

(11) **EP 2 213 521 A1**
(43) Date of publication of application: **04.08.2010**
(21) Application number: 09151508.0
(22) Date of filing: 28.01.2009
(51) Int. Cl.: B60R 21/017, B60R 21/01

(54) **Autonomous passenger restraint system IC diagnosis**

(71) Applicant: ELMOS Semiconductor AG, 44227 Dortmund (DE)
(72) Inventor: Maurer, Peter, 42555 Velbert (DE)
(74) Representative: von Kreisler Selting Werner

(57) **Abstract**

The method for a self-diagnosis in a passenger restraint system periphery unit like e.g. a squib driver IC, a power supply IC or a sensor IC, comprising the steps of providing self-diagnosis functionality in a periphery unit of the passenger restraint system, initiating the self-diagnosis by a central control unit of the passenger restraint system, and performing the self-diagnosis for the periphery unit in the periphery unit itself.

## Description

The present invention relates to a method and device for a self-diagnosis in a passenger restraint system periphery unit like e.g. a squib driver IC, a power supply IC or a sensor IC.

Modern vehicles are equipped with complex passenger restraint systems comprising a plurality of different safety related elements controlled by actuators. The known passenger restraint systems also comprise a central control unit (ECU), a power supply as well as a plurality of different sensors for sensing the current physical parameters of the vehicle. After starting the engine of a vehicle, its passenger restraint system is permanently monitored by its ECU or a microprocessor of the ECU. This means that there is a lot of traffic on the communication lines of the passenger restraint system connecting all the periphery units thereof.

It is an object of the present invention to provide a method and a device to be used in a passenger restraint system periphery unit for facilitating the communication between the individual units for self-diagnosis purposes.

For achieving this object, the present invention provides a method for a self-diagnosis in a passenger restraint system periphery unit like e.g. a squib driver IC, a power supply IC or a sensor IC, comprising
- providing self-diagnosis functionality in a periphery unit of the passenger restraint system,
- initiating the self-diagnosis by a central control unit of the passenger restraint system, and
- performing the self-diagnosis for the periphery unit in the periphery unit itself.

Also, the present invention provides a Device for a self-diagnosis in a passenger restraint system periphery unit like e.g. a squib driver IC, a power supply IC or a sensor IC, comprising
- a periphery unit capable of communicating with a central control unit of the passenger restraint system and
- a self-diagnosis controller incorporated into a periphery unit for performing a self-diagnosis of the periphery unit,
- wherein the self-diagnosis controller can be initiated for self-diagnosis purposes based on a command signal from the central control unit.

The present invention suggests to transfer the self-diagnosis functionality from the central control unit to the periphery units so that the degree of communication between the central control unit and the periphery units for self-diagnosis purposes can be reduced. According to the present invention, the periphery unit is provided with more intelligence which can be used also for performing specific activation scenarios for initiating the active elements of a passenger restraint system like e.g. squibs or the like. Also by means of smarter periphery units it is possible that the units among each other can manage and control the address space for communicating with specific ones of the active elements controlled by the periphery units in case of an emergency situation in which the passenger restraint system is activated as designed for.

In another aspect of the present invention, the step of performing the self-diagnosis for the periphery unit in the periphery unit itself comprises the step of performing self-diagnosis tasks stored in a table within the periphery unit and wherein the contents of the table are permanently monitored by the central control unit.

Normally, the periphery unit like e.g. a squib driver IC controls some circuitry connected to the driver IC. In a further embodiment of the present invention, the self-diagnosis functionality also comprises a self-diagnosis of this circuitry.

The present invention will be described in more detail referring to the drawings in which
- Fig. 1: shows the basic elements and connection therebetween of a passenger restraint system,

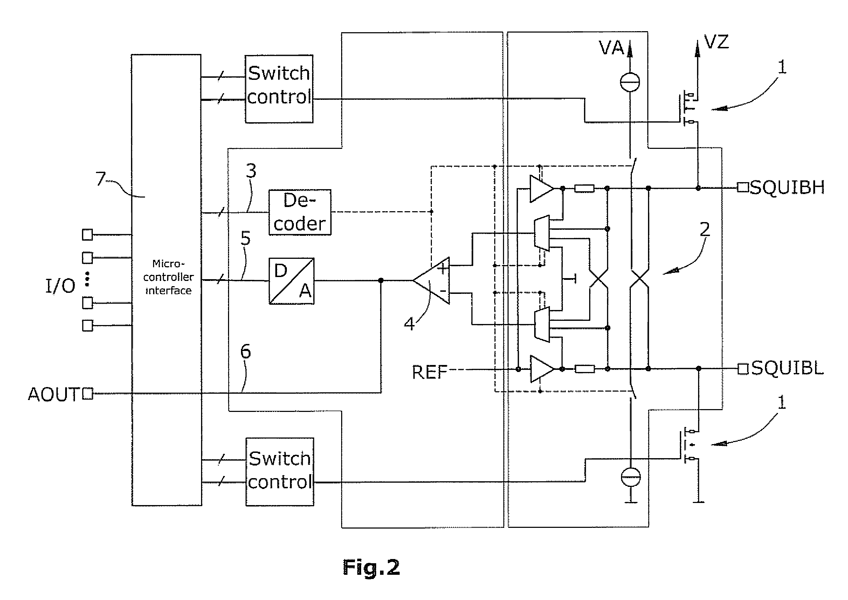

- Fig. 2: shows an example of a conventional squib driver diagnosis,
- Fig. 3: shows an example of an autonomous squib driver diagnosis periphery unit according to the present invention and
- Fig. 4: an example of a diagnosis controller according to the present invention.

Hereinbelow a new method and device of a self-diagnosis is described, which shall be implemented into airbag periphery ICs. The key features of this implementation are:
- The diagnosis process is completely performed by the periphery IC. The microprocessor of the ECU only has to enable the autonomous diagnosis process and to observe the pass/fail status.
- The details of the diagnosis tasks to be performed are stored in a schedule inside the periphery IC. This schedule may be implemented as mask programmed memory, non-volatile memory or as volatile memory.
- In case of an implementation as non-volatile memory or volatile memory the microprocessor of the ECU has the possibility to define and modify the diagnosis task list.

The advantages of the invention are:
- The microprocessor of the ECU is released from the task to control and perform the diagnosis.
- The need for communication is significantly reduced. The bandwidth of the communication interface can be reduced or provided for higher priority messages.
- The computational power in the microprocessor of the ECU needed to control and perform the diagnosis measurement can be reduced.
- The measurement process becomes independent of the cycle time of the software running on the microprocessor of the ECU.
- If the autonomous diagnosis is running in continuous loop mode, the resulting cycle time can be lower than the cycle time of the ECU software.

In the following, the implementation of the autonomous diagnosis is described instancing a squib driver IC. The same method is also applicable to other kinds of airbag periphery ICs like power supply ICs or sensor interfaces.

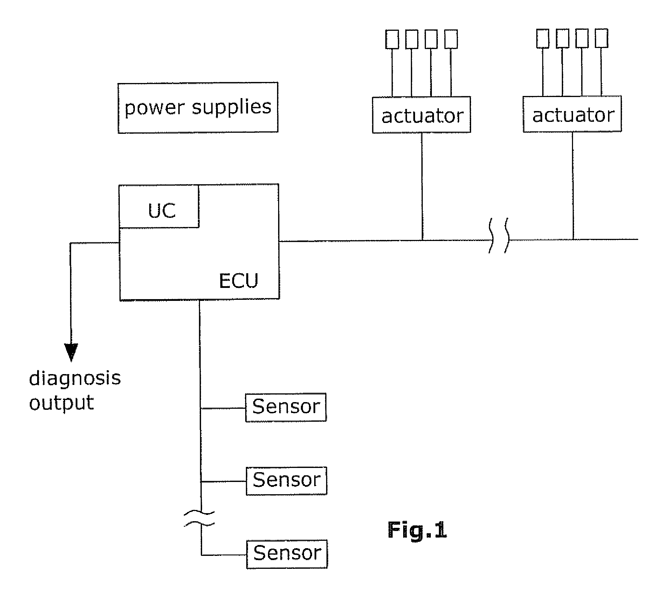

The general concept of a passenger restraint system is schematically shown in Fig. 1 while Fig. 1 shows the elements of a conventional squib driver IC used as an actuator IC in the passenger restraint system of Fig. 1.

During the power-up sequence and the operation of an passenger restraint system the squib drivers, squib lines and the squibs themselves are continuously monitored by the microprocessor of the ECU. For that purpose, the squib driver circuits contain several functional blocks: Besides the power switches 1, which are activated in order to deploy the squibs, additional circuitry 2 is supplied which is used to measure electrical properties of the squib loop. This circuitry is controlled by a set of signals 3, which are generated by the microprocessor of the ECU through a digital communication interface 7. The analogue output signal of the measurement circuitry 2 is being conditioned by an amplifier 4 and may be directly accessed over an optional analogue output 6. Alternatively, this signal may be converted into a digital number by an analogue-to-digital converter 5, so that the microprocessor of the ECU can read the measurement result through the digital communication interface 7. In this configuration, the complete diagnostic sequence is directly controlled by the microprocessor of the ECU. For each electrical property this microprocessor has to perform the following steps:
- Set the control signals 3 in order to configure the measurement circuitry 2 for the desired task
- Wait until the measurement signal conditioned by amplifier 4 has settled
- Compare the analogue output signal 6 to a defined limit value and perform a pass/fail decision or
- Start a conversion of the analogue output signal on the analogue-to-digital converter 5, read and compare the digital conversion result to a defined limit value and perform a pass/fail decision.

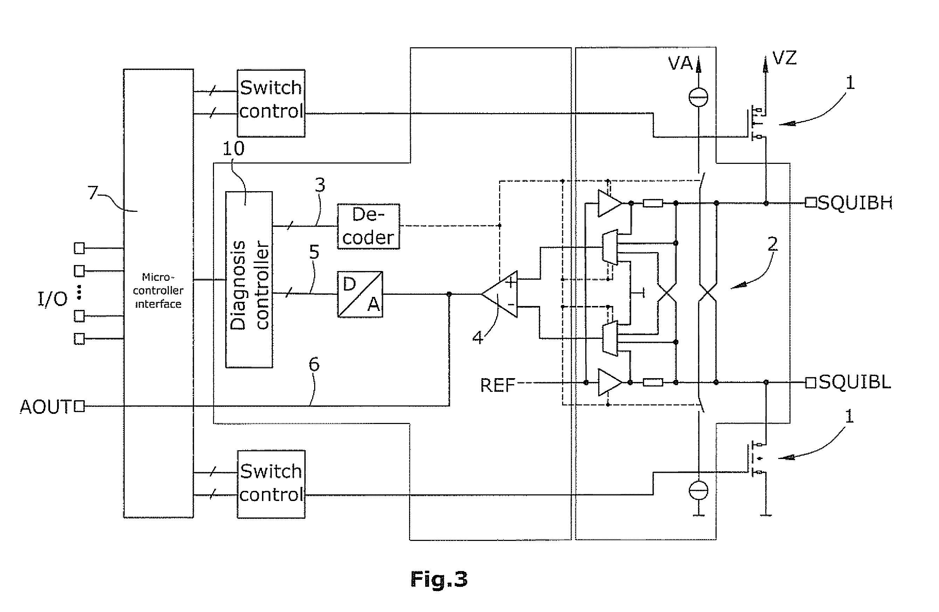

Compared to the squib driver IC in the conventional diagnosis, in the squib driver IC according to the embodiment of the invention in Fig. 3, a new functional block called diagnosis controller 10 has been added. This diagnosis controller 10 is located between the digital communication interface 7 and the diagnosis system. The diagnosis controller 10 has access to the control signals 3 of the diagnosis system and the measurement results, converted into a digital number by the analogue-to-digital converter 5. Thus, the diagnosis controller 10 is capable of performing diagnosis tasks without the need of interaction by the microprocessor of the ECU. The list of diagnosis tasks to be performed by the diagnosis controller 10 is stored in a schedule table and may be either processed in a nonrecurring way, initiated by the microprocessor of the ECU, or in a continuous repetitive way.

The schedule table consists of a list of measurement setups. Each setup comprises the following information:
- The required configuration of the control signals 3 of the diagnosis system
- A comparison threshold for the measurement result of the analogue-to-digital converter 5
- A polarity flag which tells if the measurement result is expected to be less or greater than the comparison threshold.

After having finished the tasks stored in the schedule table the diagnosis controller 10 summarizes the comparison results for the microprocessor of the ECU. If one or more diagnosis tasks have resulted in unexpected measurement results, a failure flag is set. In addition to this failure flag the microprocessor of the ECU may also read the list of comparison results to identify the failing diagnosis tasks.

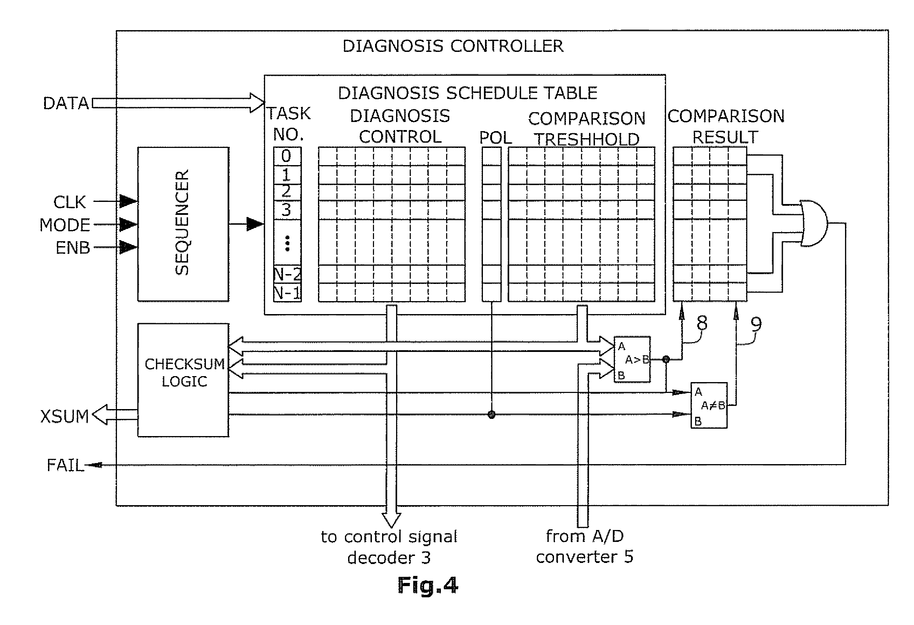

In the embodiment according to Fig. 4, the diagnosis table holds the information about the diagnosis tasks to be performed. There are different ways to implement it, i.e. to provide the table with the diagnosis tasks to be performed:
- Mask programmed memory (e.g. ROM): Fixed content
- Non-volatile memory (e.g. EEPROM): Customizable by end-of-line programming
- Volatile memory (e.g. RAM): Content programmed after power-on-reset, changeable on-the-fly

In case of a customizable implementation of the schedule table, an indirect addressing concept shall preferentially be used for the interface to the microprocessor of the ECU (address pointer + data register). The sequencer can be operated either in single-shot or continuous mode and starts the diagnosis process as soon as its enable input has been set. If the diagnosis process has to be interrupted e.g. due to an expected crash scenario, the diagnosis controller will reset all diagnosis hardware instantaneously. Ongoing diagnosis tasks will be aborted.

In order to raise the immunity of the diagnosis process against sporadic disturbances a filtering of the comparison signal 9 can be applied.

The maximum number of tasks provided in the schedule table is defined by the application requirements. Likewise, the width of the diagnosis control word and the comparison threshold data word may vary depending on application requirements. At the end of each diagnosis task the control data word, the comparison threshold, the polarity flag and the comparator output 8 are sampled and transferred into a checksum logic, which computes a checksum over the these signals and one complete schedule cycle. Due to the fact that this checksum calculation covers the complete diagnosis schedule and the result vector, errors in the schedule table are detectable as well as a failing diagnosis task.

The joint evaluation of the accumulated failure flag and the checksum allows the microprocessor of the ECU to perform a plausibility check of the fail flag for reasons of fault tolerance.

## Claims

1. Method for a self-diagnosis in a passenger restraint system periphery unit like e.g. a squib driver IC, a power supply IC or a sensor IC, comprising
- providing self-diagnosis functionality in a periphery unit of the passenger restraint system,
- initiating the self-diagnosis by a central control unit of the passenger restraint system, and
- performing the self-diagnosis for the periphery unit in the periphery unit itself.

2. Method according to claim 1, wherein the step of performing the self-diagnosis for the periphery unit in the periphery unit itself comprises the step of performing self-diagnosis tasks stored in a table within the periphery unit and wherein the contents of the table are permanently monitored by the central control unit.

3. Method according to claim 1 or 2, wherein the periphery unit controls circuitry connected thereto and wherein the self-diagnosis functionality also comprises a self-diagnosis of the circuitry.

4. Device for a self-diagnosis in a passenger restraint system periphery unit like e.g. a squib driver IC, a power supply IC or a sensor IC, comprising
- a periphery unit capable of communicating with a central control unit of the passenger restraint system and
- a self-diagnosis controller incorporated into a periphery unit for performing a self-diagnosis of the periphery unit,
- wherein the self-diagnosis controller can be initiated for self-diagnosis purposes based on a command signal from the central control unit.

5. Device according to claim 4, wherein the periphery unit controls circuitry connected thereto and wherein the self-diagnosis functionality also comprises a self-diagnosis of the circuitry.
